# EUROPEAN PATENT APPLICATION

(11) **EP 2 648 270 A1**
(43) Date of publication of application: **09.10.2013**
(21) Application number: 12179372.3
(22) Date of filing: 06.08.2012
(51) Int. Cl.: H01M 10/44, H01M 4/04, H01M 10/0525, H01M 4/505, H01M 4/525, H01M 4/36, H01M 4/02

(54) **Lithium ion secondary battery and method for preparing the same**

(30) Priority: 02.04.2012 KR 20120034030
(71) Applicant: Samsung Corning Precision Materials Co., Ltd., Gyeongsangbuk-do 730-725 (KR)
(72) Inventor: Choi, Shin Jung, Chungcheongnam-do 336-719 (KR)
(74) Representative: Gulde Hengelhaupt Ziebig & Schneider

(57) **Abstract**

A lithium ion secondary battery and a method for preparing the same are provided. The lithium ion secondary battery includes a positive electrode having a positive active material represented by Formula (1), a negative electrode and an electrolyte, wherein the positive active material is activated by performing a first charge operation with a voltage ranging from 4.5 V to 4.7 V and the voltage is then reduced to less than 4.5 V:

aLi₂MnO₃-(1-a)LiMO₂ (1)

where M is at least one selected from the group consisting of Ni, Co and Mn, and 0<a<1.

## Description

### Background of the Invention

### 1. Field of the Invention

Aspects of the present invention relate to a lithium ion secondary battery and a method for preparing the same, and more particularly, to a lithium ion secondary battery, which can solve a problem of gas generation of a lithium metal oxide used as a positive active material while improving capacity and cycle life of the battery, and a method for preparing the same.

### 2. Description of the Related Art

Recently, along with the development of the advanced electronics industry, the use of portable electronic instruments is increasing as electronic equipment is becoming smaller and lighter. Studies on lithium rechargeable batteries are actively being pursued in accordance with the increasing demand for batteries having high energy density for use as a power source in portable electronic instruments. The lithium ion secondary batteries are generally manufactured by providing a positive electrode and a negative electrode capable of reversibly intercalating/deintercalating lithium ions, and inserting an electrolyte into a space between the positive electrode and the negative electrode. Electrical energy is produced as a result of a redox reaction caused upon intercalating/deintercalating the lithium ions at the positive electrode and the negative electrode.

The positive active material can be considered the most important material for ensuring battery performance and safety. Commonly used materials for the positive active material are transition metal compounds such as a metal composite oxides, for example, LiCoO₂, LiMn₂O₄, LiNiO₂, LiNi₁₋ₓCoₓO₂ (where 0<x<1), or LiMnO₂. Co-based positive active materials such as LiCoO₂ are widely used because of their high energy density (LiCoO₂ has a theoretical capacity: 274 mAh/g) and good cycle-life characteristics (capacity retention). However, the Co-based positive active materials are disadvantageous because of their poor stability at high temperature and low cost competitiveness due to insufficient resources of cobalt used as a raw material.

In practice, because LiCoO₂ is structurally unstable, the Li is actually retained at 50% in the form of LiₓCoO₂ (x>0.5). That is, when applying a charge voltage of 4.2V relative to the Li metal, the generated capacity is only 140 mAh/g, which is about 50% of the theoretical capacity. Therefore, in order to increase the capacity to more than 50% of the theoretical capacity, the charge voltage should be increased to more than 4.2V. In this case, the atomic value of Li in LiₓCoO₂ becomes less than 0.5, and the phase is changed from hexagonal to monoclinic. As a result, it is structurally unstable and the capacity is sharply deceased upon repeating the cycles.

In addition, LiNiO₂-based positive active materials are relatively cheap while demonstrating a high discharge capacity. However, a sharp phase change in crystalline structure may be caused due to a volumetric change upon repeating the charge/discharge cycles. In addition, when the LiNiO₂-based positive active materials are exposed to the air or moisture, their stability may be sharply lowered.

Accordingly, studies on positive active materials for lithium ion secondary batteries have been undertaken to find an alternative material of LiCoO₂, LiMnO₂, or LiMn₂O₄, which is stable at a high charge voltage of more than 4.2 V and has a high energy density and good cycle-life characteristics. As a result, attempts and research are actively carried out for lithium metal oxides having nickel-manganese and nickel-cobalt-manganese mixed in a ratio of 1:1 or 1:1:1 to be used as positive active materials.

### Brief Summary of the Invention

Aspects of the present invention provide a high-capacity and long-life lithium ion secondary battery, which had improved battery performance through initial activation and adjustment of charge/discharge voltages.,

Aspects of the present invention further provide a method for preparing the lithium ion secondary battery.

In accordance with one aspect of the present invention, there is provided a lithium ion secondary battery comprising a positive electrode having a positive active material represented by Formula (1), a negative electrode and an electrolyte, wherein the positive active material is activated by performing a first charge operation with a voltage ranging from 4.5 V to 4.7 V and the voltage is then reduced to less than 4.5 V: 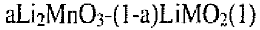 where M is at least one selected from the group consisting of Ni, Co and Mn, and 0<a<1.

The positive active material represented by Formula (1) may include a positive active material represented by Formula (2):

LiₓNi_{y}Co_{z}Mn_{1-y-z}O_{2+w} (2)

wherein x ≥ 1.05, 0 < y < 0.35, and 0 < z < 0.35, w > 0.

The positive active material represented by Formula (2) may be a compound having a molar ratio of Li to a mixture of transition metal elements Ni, Co, and Mn, Li:(Ni+Co+Mn), is in a range of 1.05 to 1.5 based on 1 mole of the mixture (Ni+Co+Mn).

In accordance with another aspect of the present invention, there is provided a method for preparing a lithium ion secondary battery, the method including preparing a slurry by mixing a positive active material represented by Formula (1), a conductive agent and a binder; preparing a positive electrode by coating the slurry on a positive current collector; preparing a battery using the positive electrode by injecting an electrolyte; and performing initial activation on the prepared battery by performing a first charge operation with a voltage ranging from 4.5 V to 4.7 V and then reducing the voltage to less than 4.5 V:

aLi₂MnO₃-(1-a)LiMO₂ (1)

where M is at least one selected from the group consisting of Ni, Co and Mn, and 0<a<1.

In the method for preparing a lithium ion secondary battery, the positive active material represented by Formula (1) may include a positive active material represented by Formula (2):

LiₓNi_{y}Co_{z}Mn_{1-y-z}O_{2+w} (2)

wherein x ≥ 1.05, 0 < y < 0.35, and 0 < z < 0.35, w > 0.

In addition, the positive active material represented by Formula (2) may be a compound having a molar ratio of Li to a mixture of transition metal elements Ni, Co, and Mn, Li:(Ni+Co+Mn), is in a range of 1.05 to 1.5 based on 1 mole of the mixture (Ni+Co+Mn).

As described above, according to the present invention, an inactive portion of a positive active material is activated by applying a high voltage in a first charge cycle and then reducing the voltage to less than 4.5 V, thereby providing a lithium ion secondary battery having an improved capacity without side reactions during charge/discharge cycles by performing initial activation by suppressing generation of oxygen gas and a passive film.

Additional aspects and/or advantages of the invention will be set forth in part in the description which follows and, in part, will be obvious from the description, or may be learned by practice of the invention.

### Brief Description of the Drawings

The objects, features and advantages of the present invention will be more apparent from the following detailed description in conjunction with the accompanying drawings, in which:
FIG. 1 is a schematic view showing a structure of a positive active material according to Preparation Example of the present invention;
FIG. 2 is a graph showing curves of the first charge/discharge cycle at 0.1 C, in which the curves a and b indicate Examples 1 and 2 and the curves c and d indicate Comparative Examples 1 and 2; and

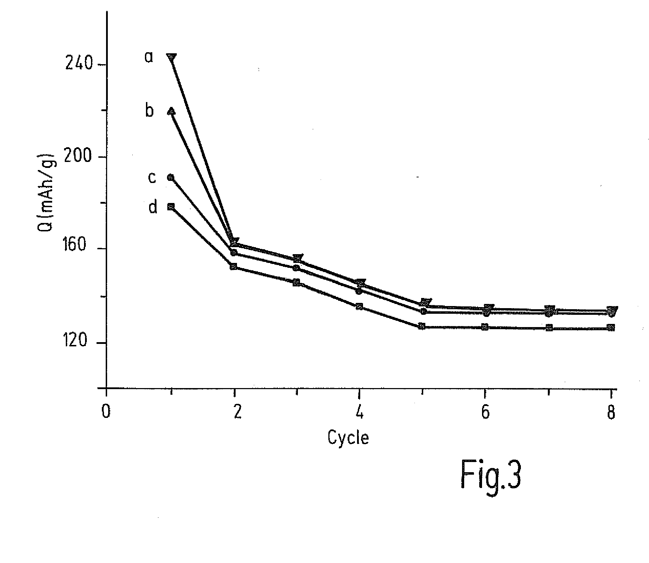

FIG. 3 is a graph showing cycle-life characteristics of positive active materials according to Examples 1 and 2 and Comparative Examples 1 and 2, in which the curves a and b indicate Examples 1 and 2 and the curves c and d indicate Comparative Examples 1 and 2, charge/discharge cycles were performed with an activation voltage in the first cycle, cells were charged with 4.2 V and then discharged to reach 2.5 V in cycles after the second cycle, the second cycle was performed with 0.1 C, the third cycle was performed with 0.2 C, the fourth cycle was performed with 0.5 C, and cycles after the fourth cycle were performed with 1C.

### Detailed Description of the Invention

Hereinafter, embodiments of the present invention will be described in detail with reference to the accompanying drawings.

The present invention is directed to a lithium ion secondary battery comprising a positive electrode having a positive active material represented by Formula (1), a negative electrode and an electrolyte, wherein the positive active material is activated by performing a first charge operation with a voltage ranging from 4.5 V to 4.7 V and the voltage is then reduced to less than 4.5 V:

aLi₂MnO₃-(1-a)LiMO₂ (1)

where M is at least one selected from the group consisting of Ni, Co and Mn, and 0<a<1.

The positive active material represented by Formula (1) is a solid solution as a mixture of a layered positive active material LiMO₂ and Li₂MnO₃. The layered positive active material LiMO₂ is configured such that two MO₂ layers exist in a crystal structure and lithium ions exist between the MO₂ layers. Manganese exists in a stable tetravalent cation (Mn⁴⁺) in Li₂MnO₃ and contributes to stabilize the layered structure due to a high activation barrier for diffusion.

In addition, LiMO₂ is an active portion where reversible charge/discharge cycles are carried out, and Li₂MnO₃ is an inactive portion where the tetravalent cation (Mn⁴⁺) exists at less than 4.5 V. If a voltage of 4.5 V or higher is applied, the inactive material Li₂MnO₃ is changed into an active material while producing MnO₂ in an electrochemical reaction.

LiMO₂ portion (active) LiMO₂ → Li+ + MO₂ + e-

Li₂MnO₃ portion (inactive) Li₂MnO₃ → 2Li+ + MnO₂ + ½O₂ + 2e-

Li₂MnO₃ → Li₂O + MnO₂ + 2e-

When charge/discharge operations are performed at a high voltage of 4.5 V or greater, the positive active material demonstrates a high capacity. In this case, however, oxygen gas and a passive film (Li₂O) may be generated.

Therefore, in the lithium ion secondary battery including a positive electrode material represented by Formula (1), an inactive portion of the positive active material is activated by applying a high voltage in a first charge cycle and then reducing the voltage to less than 4.5 V, thereby suppressing generation of oxygen gas and a passive film.

That is to say, the capacity of the lithium ion secondary battery can be improved without side reactions during charge/discharge cycles by performing initial activation using an initial activation voltage of 4.5 V or greater and then using a reduced voltage of less than 4.5 V.

The positive active material represented by Formula (1) includes a positive active material represented by Formula (2):

LiₓNi_{y}Co_{z}Mn_{1-y-z}O_{2+w} (2)

wherein x ≥ 1.05, 0 < y < 0.35, and 0 < z < 0.35, w > 0.

The positive active material represented by Formula (2) is preferably a compound having a molar ratio of Li to transition metal elements Ni, Co, and Mn is in a range of 1.05 to 1.5 based on 1 mole of a total amount of Ni, Co, and Mn.

The present invention also provides a method for preparing a lithium ion secondary battery including preparing a slurry by mixing a positive active material represented by Formula (1), a conductive agent and a binder; preparing a positive electrode by coating the slurry on a positive current collector; preparing a battery using the positive electrode by injecting an electrolyte; and performing initial activation on the prepared battery by charging the battery with a voltage ranging from 4.5 V to 4.7 V in the first cycle:

aLi₂MnO₃-(1-a)LiMO₂ (1)

where M is at least one selected from the group consisting of Ni, Co and Mn, and 0<a<1.

In the present invention, the method for preparing the positive active material may employ a co-precipitation method, but not limited thereto. For example, an aqueous solution of metal salts including at least one ion selected from Ni, Co and Mn, ammonium hydroxide and a NaOH solution are mixed in a reaction vessel to obtain a desired metal oxide, followed by uniformly mixing with lithium carbonate and performing heat treatment, thereby preparing a lithium metal oxide as a positive active material.

The heat treatment is preferably calcinations performed at a temperature in a range of 600 to 1000 °C for 5 to 30 hours. After the heat treatment, the size and shape of the obtained lithium metal oxide can be controlled by additionally grinding the same.

The obtained positive active material, the binder and the conductive agent are mixed with a solvent to form a slurry, which is then coated on a positive current collector, dried and compressed, thereby preparing a positive electrode.

In the lithium ion secondary battery according to an embodiment of the present invention, the negative electrode may include natural graphite, artificial graphite, carbon fiber, cokes, carbon black, carbon nanotube, fullerene, activated carbon, lithium metal or lithium alloy, but aspects of the present invention are not limited thereto.

Examples of the conductive agent include a conductive fiber such as natural graphite, artificial graphite, acetylene black, ketjen black, denka black, channel black, lamp black, thermal black, carbon fiber or metal fiber; a conductive metal oxide such as titanium oxide; and metal powder of aluminum or nickel.

The binder facilitates binding between an active material and a conducting agent to fix the same to a current collector, and examples thereof include compounds generally used in forming the lithium ion secondary battery, such as polyvinylidene fluoride (PVDF), polypropylene, carboxymethylcellulose (CMC), starch, hydroxypropylcellulose, polyvinylpyrollidone, and so on.

As the positive current collector, an aluminum foil may be used.

The electrolyte serves as a medium for transferring lithium ions in the positive and negative electrodes and has a lithium salt dissolved in an organic solvent. Examples of the organic solvent may include ethylene carbonate, propylene carbonate, dimethyl carbonate, diethyl carbonate, methylpropyl carbonate, ethylpropyl carbonate, butylene carbonate, acetonitrile, and so on, which can be used alone or in combination.

The lithium salt serves as a lithium ion source and may include lithium salts generally used for the electrolyte of a lithium ion secondary battery, such as LiPF₆, LiBF₄, LiSbF₆, LiAsF₆, LiClO₄, LiN(C₂F₅SO₂)₂, LiN(CF₃SO₂)₂, CF₃SO₃Li and LiC(CF₃SO₂)₃.

The lithium ion secondary battery according to the present invention includes a separator between the positive and negative electrodes, thereby preventing an electrical short circuit between the positive and negative electrodes and providing an ion transfer path. For example, a polyethylene (PE) separator or a polypropylene (PP) separator may be used as a polyolefin-based separator.

When the lithium ion secondary battery according to the present invention is employed to an electronic product, the battery is sufficiently activated in the first charge/discharge cycle to then remove the gas generated in the activation process, followed by resealing the battery for market distribution of the electronic product, thereby providing the lithium ion secondary battery having an improved capacity without side reactions suppressed.

The following examples illustrate the present invention in further detail. However, it is understood that the present invention is not limited by these examples.

### EXAMPLES

### [Preparation Example]

NiSO₄, CoSO₄ and MnSO₄ were mixed in a reaction vessel in a molar ratio Ni:Co:Mn being 0.35:0.15:0.50. A NaOH solution and ammonium hydroxide were added to the resultant product and stirred, thereby preparing a spherical metal oxide. Lithium carbonate was uniformly mixed with the obtained spherical metal oxide such that lithium (Li) is contained in an amount of 1.13 mole in the obtained spherical metal oxide based on 1 mole of a total amount of Ni, Co, and Mn, followed by performing heat treatment at 950°C for 10 hours, thereby preparing a lithium metal oxide.

### [Example 1]

94 parts by weight of the lithium metal oxide obtained in Preparation Example as a positive active material and 3 parts by weight of Denka black as a conductive agent were uniformly mixed and a polyvinylidene fluoride (PVDF) solution as a binder was added thereto, thereby preparing a slurry having a positive active material, the conductive agent and the binder in a weight ratio of 92:4:4. The slurry was coated on a 15 µm thick aluminum foil, dried in the air and dried under vacuum, thereby manufacturing a positive electrode. A coin-type cell was fabricated using the manufactured positive electrode, Li metal as a negative electrode and 1.3M LiPF₆ dissolved in a mixed solvent of propylene carbonate (PC), diethyl carbonate (DEC), and ethylene carbonate (EC) (PC:DEC:EC=5:3:2) as a liquid electrolyte, and a porous PE material as a separator.

The fabricated coin-type cell was subjected to a charge/discharge test. That is to say, during the first charge operation, the test cell was charged with a constant current of 0.1 C until the voltage reached to 4.6 V, and then charged with a constant voltage of 4.6 V until the current reached to one tenth (1/10). During the first discharge operation, the test cell was discharged with a constant current of 0.1 C until the voltage reached to 2.5 V. After the second charge/discharge cycle, the test cell was charged and discharged with current varying from 0.1 C to 0.2 C to 0.5 C and to 1 C in a voltage range between 4.3 V and 2.5 V. After the fifth charge/discharge cycle, the test cell was charged and discharged with a constant current of 1 C. Here, the charge operation was performed until the voltage reached 4.3 V and the current is reduced to one tenth (1/10) with a constant voltage of 4.3 V.

### [Example 2]

The charge/discharge test was carried out in the same manner as in Example 1, except that the first charge voltage was changed to 4.5 V.

### [Comparative Example 1]

The charge/discharge test was carried out in the same manner as in Example 1, except that the first charge voltage was changed to 4.4 V.

### [Comparative Example 2]

The charge/discharge test was carried out in the same manner as in Example 1, except that the first charge operation was performed with 0.1 C/4.3 V and the first discharge operation was performed with 0.1 C/2.5 V.

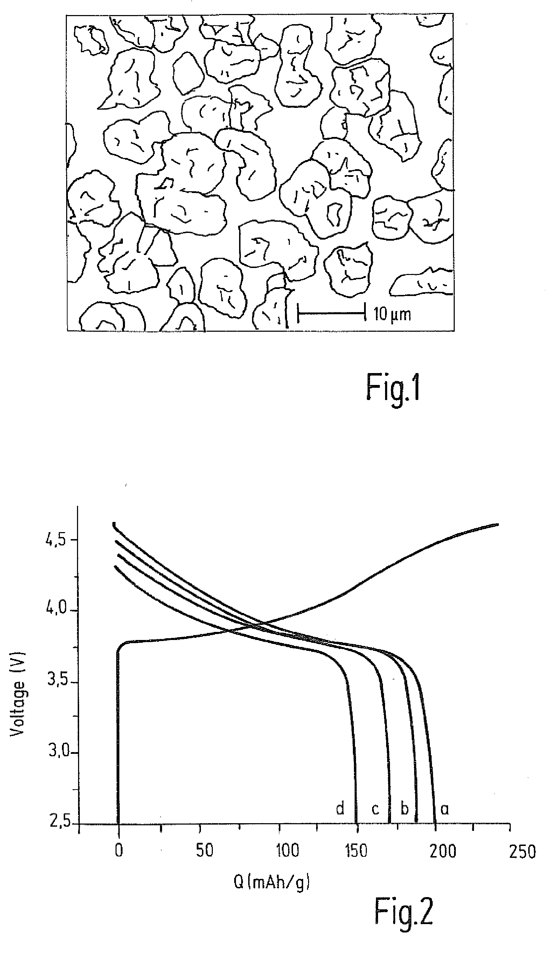

The graphs showing curves of the first charge/discharge cycle at 0.1 C in Examples 1 and 2 and Comparative Examples 1 and 2, and cycle-dependant discharge capacities are shown in FIGS. 2 and 3.

As confirmed from the graph shown in FIG. 3, the batteries of Examples 1 and 2 had improved battery capacities and good cycle-life characteristics, compared to those of Comparative Examples 1 and 2. That is to say, the batteries of Examples 1 and 2 had relatively high discharge retention ratios even with the increasing number of cycles, compared to those of Comparative Examples 1 and 2.

Although exemplary embodiments of the present invention have been described in detail hereinabove, it should be understood that many variations and modifications of the basic inventive concept herein described, which may appear to those skilled in the art, will still fall within the spirit and scope of the exemplary embodiments of the present invention as defined by the appended claims.

## Claims

1. A lithium ion secondary battery comprising a positive electrode having a positive active material represented by Formula (1), a negative electrode and an electrolyte, wherein the positive active material is activated by performing a first charge operation with a voltage ranging from 4.5 V to 4.7 V and the voltage is then reduced to less than 4.5 V:
aLi₂MnO₃-(1-a)LiMO₂ (1)
where M is at least one selected from the group consisting of Ni, Co and Mn, and 0<a<1.

2. The lithium ion secondary battery of claim 1, wherein the positive active material represented by Formula (1) includes a positive active material represented by Formula (2):
LiₓNi_{y}Co_{z}Mn_{1-y-z}O_{2+w} (2)
wherein x ≥ 1.05, 0 < y < 0.35, and 0 < z < 0.35, w > 0.

3. The lithium ion secondary battery of claim 2, wherein the positive active material represented by Formula (2) is a compound having a molar ratio of Li to a mixture of transition metal elements Ni, Co, and Mn, Li:(Ni+Co+Mn), is in a range of 1.05 to 1.5 based on 1 mole of the mixture (Ni+Co+Mn).

4. A method for preparing a lithium ion secondary battery comprising:
preparing a slurry by mixing a positive active material represented by Formula (1), a conductive agent and a binder;
preparing a positive electrode by coating the slurry on a positive current collector;
preparing a battery using the positive electrode by injecting an electrolyte; and
performing initial activation on the prepared battery by performing a first charge operation with a voltage ranging from 4.5 V to 4.7 V:
aLi₂MnO₃-(1-a)LiMO₂ (1)
where M is at least one selected from the group consisting of Ni, Co and Mn, and 0<a<1.

5. The method of claim 4, wherein the positive active material represented by Formula (1) includes a positive active material represented by Formula (2):
LiₓNi_{y}Co_{z}Mn_{1-y-z}O_{2+w} (2)
wherein x ≥ 1.05, 0 < y < 0.35, and 0 < z < 0.35, w > 0.

6. The method of claim 5, wherein the positive active material represented by Formula (2) is a compound having a molar ratio of Li to a mixture of transition metal elements Ni, Co, and Mn, Li:(Ni+Co+Mn), is in a range of 1.05 to 1.5 based on 1 mole of the mixture (Ni+Co+Mn).
